# FASCICULE DE BREVET EUROPEEN

(11) **EP 2 929 997 B1**
(45) Date de publication et mention de la délivrance du brevet: **28.08.2019**
(21) Numéro de dépôt: 15162797.3
(22) Date de dépôt: 08.04.2015
(51) Int. Cl.: B28C 5/46, B28C 7/00, C04B 28/02, C04B 40/06, C04B 40/00

(54) **PROCEDE DE FABRICATION D'UN COULIS POUR BÉTON, LE COULIS POUR BÉTON ET SON UTILISATION**
PROZESS ZUR HERSTELLUNG EINER MASSE FÜR BETON, MASSE FÜR BETON UND IHRE VERWENDUNG
PROCESS FOR THE FABRICATIONN OF A SLURRY FOR CONCRETE, SLURRY FOR CONCRETE AND ITS USE

(30) Priorité: 08.04.2014 FR 1453098
(43) Date de publication de la demande: 14.10.2015
(73) Titulaire: SOLETANCHE FREYSSINET, 92500 Rueil Malmaison (FR)
(72) Inventeur: Chaniat, Alain, 26700 Pierrelatte (FR); Botti, Didier Jean, 13012 Marseille (FR); Sarraf, Riad, 50460 Querqueville (FR); Honnorat, Christian, 13013 Marseille (FR)
(74) Mandataire: Cabinet Plasseraud

(56) Documents cités:
- DE-A1- 3 929 703
- FR-A1- 2 205 494
- FR-A5- 2 195 184
- FR-A6- 2 165 148
- CAU DIT COUMES C ET AL: "Calcium sulfoaluminate cement blended with OPC: A potential binder to encapsulate low-level radioactive slurries of complex chemistry", CEMENT AND CONCRETE RESEARCH, PERGAMON PRESS, ELMSFORD, NY, US, vol. 39, no. 9, 1 septembre 2009 (2009-09-01), pages 740-747, XP026437593, ISSN: 0008-8846 [extrait le 2009-06-30]

## Description

La présente invention concerne un procédé de fabrication d'un coulis pour béton.

Elle trouve son application dans des domaines variés tels que le bâtiment, le génie civil, ou encore dans le secteur nucléaire.

Il est connu qu'un coulis pour béton est obtenu par mélange d'un liant hydraulique, sous forme solide granuleuse, et d'eau sous forme liquide ; le liant hydraulique se durcit alors progressivement, du fait de son contact avec l'eau. On appelle durée pratique d'utilisation le temps pendant lequel le coulis n'est pas complètement durci. La durée pratique d'utilisation est variable, de quelques minutes à quelques jours.

Un tel procédé de fabrication connu présente de multiples inconvénients, du fait en particulier du durcissement progressif et irréversible du mélange de liant hydraulique et d'eau.

En effet, si le coulis est préparé loin du lieu dans lequel il est utilisé, par exemple un chantier, alors son acheminement est complexe, requiert au minimum un camion toupie et implique que le coulis soit livré avant la fin de la durée pratique d'utilisation, ce qui rend délicat les transports sur une longue distance. De plus, chaque élément mis en contact avec le béton (comme des camions toupies, des tuyauteries) est sali par le béton et doit être nettoyé, ce qui génère encore des coûts et du temps supplémentaires.

On peut éventuellement recourir à l'ajout dans le coulis d'un retardateur de prise, qui a pour effet d'augmenter la durée pratique d'utilisation. Néanmoins, la présence d'un tel retardateur augmente la quantité de matières organiques. Le rayonnement solaire fait subir une radiolyse à ces matières organiques, ce qui produit de l'hydrogène sous forme gazeuse, et modifie de façon indue les propriétés du béton obtenu.

Un autre inconvénient réside dans le fait qu'il peut être nécessaire de prélever des échantillons du coulis afin d'en contrôler les propriétés mécaniques et physico-chimiques. C'est le cas par exemple dans le secteur nucléaire, pour le stockage de déchets nucléaires dans des colis par enrobage de béton où il est primordial de maîtriser les propriétés des déchets enrobés. Or, du fait du durcissement du coulis, un tel contrôle devrait être presque simultané à la fabrication du coulis, ce qui n'est pas toujours possible, et les propriétés physico-chimiques évoluant avec le temps, les tests effectués bien après l'enrobage ne permettent pas de déterminer quelles étaient les propriétés au moment de l'enrobage.

De plus, si le coulis est fabriqué directement sur son lieu d'utilisation, il est possible que l'eau contienne des éléments polluants, et, dans ce cas, la qualité du béton obtenu peut s'avérer médiocre.

Les documents FR 2 165 148, FR 2 205 494, FR 2 195 184, DE 39 29 703 concernent des coulis de béton à base de glace selon l'état de l'art ; le document CAU DIT COUMES C Et AL : « Calcium sulfoaluminate cement blended with OPC: A potential binder to encapsulate low-level radioactive slurries of complex chemistry » concerne le stockage de déchet nucléaire selon l'état de l'art.

Le but de la présente invention est de remédier aux inconvénients présentés ci-dessus.

A cet effet, l'invention a pour objet un procédé de fabrication d'un coulis pour béton, comprenant une étape d'un mélange d'un liant hydraulique et d'eau, le procédé comprenant une étape de surgélation de l'eau sous forme solide, l'eau étant solidifiée préalablement à l'étape de mélange, l'eau solidifiée étant réduite en poudre d'eau et présentant une granularité inférieure à la granularité du liant hydraulique.

Grâce à l'invention, le coulis peut être préparé bien avant son utilisation, et stocké à une température suffisamment basse pour que l'eau reste sous forme solide, ce qui permet de s'affranchir de la durée pratique d'utilisation.

En particulier, le transport est simplifié puisque, le béton étant déplacé sous forme surgelée, ne risque pas de commencer à prendre. De plus, tant que le béton reste sous forme surgelée, il ne salit pas les éléments avec lesquels il est mis en contact, ce qui évite des nettoyages longs et fastidieux.

De plus, du fait de la préparation anticipée du coulis, il n'est plus nécessaire de recourir à un retardateur de prise.

Par ailleurs, les caractéristiques du béton surgelé peuvent être connues et maîtrisées à tout moment, ce qui est particulièrement adapté dans le cas des déchets nucléaires enrobés.

La logistique en est aussi grandement simplifiée, puisqu'il est possible de centraliser la fabrication du coulis sur un seul emplacement. Cette centralisation de la fabrication du coulis permet d'assurer la qualité du béton obtenu, en particulier grâce au contrôle possible de la qualité de l'eau.

D'autres caractéristiques et avantages de l'invention apparaîtront encore à la lecture de la description qui va suivre et qui est purement illustrative.

Le procédé de fabrication d'un coulis pour béton selon l'invention comprend une étape d'un mélange d'un liant hydraulique et d'eau, et est caractérisé en ce que le procédé comprend une étape de surgélation de l'eau sous forme solide, l'eau étant solidifiée préalablement à l'étape de mélange, l'eau solidifiée étant réduite en poudre d'eau et présentant une granularité inférieure à la granularité du liant hydraulique.

Par surgélation, on entend refroidissement de l'eau à une température suffisamment basse pour que l'eau soit sous forme solide.

De préférence, cette température, dite température de surgélation de l'eau, est inférieure ou égale à 0°Celsius, de préférence à une température inférieure ou égale à -18°Celsius.

Ces températures basses permettent d'assurer que la réaction chimique de prise hydraulique du liant est figée.

Le liant hydraulique est d'origine minérale et/ou est un biomatériau, tel que par exemple du ciment.

Le liant hydraulique se présente sous forme de poudre, c'est-à-dire qu'il est constitué de particules solides.

Avantageusement, le procédé de fabrication comprend une étape de refroidissement du liant hydraulique à une température sensiblement égale à la température de surgélation de l'eau. Cette étape permet de raccourcir le temps de thermalisation du mélange comprenant le liant hydraulique et l'eau, puisque l'eau et le liant sont à la même température.

Selon un premier mode de réalisation, l'eau est solidifiée préalablement à l'étape de mélange. Puis, l'eau solidifiée est réduite en poudre. Par poudre, on entend que l'eau est sous forme de particules solides.

La poudre d'eau présente une granularité inférieure à la granulométrie du liant hydraulique.

Il est possible de figer plus vite la réaction chimique de prise du liant hydraulique par l'eau.

La granularité du liant hydraulique est variable, et peut comprendre des particules de taille de l'ordre d'une quelques centaines de micromètres à moins d'un micromètre.

Selon un deuxième mode de réalisation, l'étape de surgélation a lieu concomitamment à l'étape de mélange.

Ainsi, la réaction chimique de prise hydraulique a commencé et est figée par le froid, et c'est le mélange du liant et d'eau qui est solidifié.

Ensuite, le procédé comprend une étape de mise en poudre du mélange solidifié. Par poudre, on entend que le mélange d'eau et de liant en partie déjà pris est constitué de particules solides.

L'étape de mise en poudre peut être par exemple une étape de broyage.

Le procédé de fabrication, selon le premier ou selon le deuxième mode de réalisation, comprend avantageusement une étape d'ajout d'un ou plusieurs adjuvants, comme par exemple un adjuvant hydrofuge.

Le procédé peut comprendre une étape de stockage du coulis à basse température, inférieure ou égale à 0°Celsius, de préférence inférieure ou égale à -18°Celsius. Cette étape permet une utilisation différée du coulis.

Avantageusement, le procédé de fabrication comprend une étape de réchauffement du mélange de liant hydraulique et d'eau solide, à une température suffisamment haute pour que l'eau devienne liquide, cette étape étant postérieure à l'étape de mélange et à l'étape de surgélation. Cette étape permet l'utilisation immédiate du coulis liquide.

Le coulis peut par exemple être réchauffé naturellement par thermalisation avec l'air ambiant ou réchauffé de façon forcée, par action de cannes chauffantes ou par rayonnement infrarouge ou microondes.

La présente invention a également pour objet un coulis pour béton comprenant un mélange d'un liant hydraulique et d'eau, dans lequel l'eau est sous forme d'une poudre d'eau présentant une granularité inférieure à la granularité du liant hydraulique.

Avantageusement, comme déjà expliqué, le mélange comprend un ou plusieurs adjuvants.

La présente invention trouve une application particulièrement intéressante dans l'enrobage et le confinement d'un ou plusieurs matériaux. Il est ainsi possible d'enrober un déchet nucléaire.

Cette application permet donc de stocker des déchets nucléaires sous forme de colis, les déchets nucléaires ayant été enrobés dans le coulis réchauffé.

## Revendications

1. Procédé de fabrication d'un coulis pour béton, comprenant une étape d'un mélange d'un liant hydraulique et d'eau, le procédé comprenant une étape de surgélation de l'eau sous forme solide, l'eau étant solidifiée préalablement à l'étape de mélange, l'eau solidifiée étant réduite en poudre d'eau et présentant une granularité inférieure à la granularité du liant hydraulique.

2. Procédé selon la revendication 1, dans lequel, au cours de l'étape de surgélation, l'eau est maintenue à une température inférieure à 0°Celsius, de préférence à une température inférieure ou égale à -18°Celsius.

3. Procédé selon l'une des revendications précédentes, comprenant une étape d'ajout d'un adjuvant.

4. Procédé selon l'une quelconque des revendications précédentes, comprenant une étape de stockage du coulis à basse température, inférieure ou égale à 0°Celsius, de préférence inférieure ou égale à - 18°Celsius.

5. Procédé de fabrication d'un coulis selon l'une quelconque des revendications précédentes, comprenant une étape de réchauffement du mélange de liant hydraulique et d'eau solide, à une température suffisamment haute pour que l'eau devienne liquide, cette étape étant postérieure à l'étape de mélange et à l'étape de surgélation.

6. Coulis pour béton comprenant un mélange d'un liant hydraulique et d'eau, dans lequel l'eau est sous forme solide, la poudre d'eau présentant une granularité inférieure à la granularité du liant hydraulique.

7. Coulis pour béton selon la revendication 6, dans lequel le mélange comprend un ou plusieurs adjuvants.

8. Utilisation d'un coulis selon l'une des revendications 6 ou 7 pour l'enrobage de déchet nucléaire.

## Patentansprüche

1. Prozess zur Herstellung einer Masse für Beton, aufweisend einen Schritt eines Mischens eines hydraulischen Bindemittels und Wasser, wobei der Prozess einen Schritt eines Tiefkühlens des Wassers unter fester Form aufweist, wobei das Wasser vor dem Mischschritt verfestigt wird, das verfestigte Wasser zu Wasserpulver pulverisiert wird und eine Körnung hat, die kleiner als die Körnung des hydraulischen Bindemittels ist.

2. Prozess nach Anspruch 1, in welchem im Verlaufe des Tiefkühlschritts das Wasser auf einer Temperatur von unter 0° Celsius, vorzugsweise auf einer Temperatur von unter oder gleich -18° Celsius, gehalten wird.

3. Prozess nach einem der vorstehenden Ansprüche, aufweisend einen Schritt eines Hinzufügens eines Zusatzmittels.

4. Prozess nach einem der vorstehenden Ansprüche, aufweisend einen Schritt eines Lagerns der Masse bei einer tiefen Temperatur von unter oder gleich 0° Celsius, vorzugsweise unter oder gleich -18° Celsius.

5. Prozess zur Herstellung einer Masse nach einem der vorstehenden Ansprüche, aufweisend einen Schritt eines Wiederaufheizens des Gemisches aus hydraulischem Bindemittel und festem Wasser auf eine Temperatur, die ausreichend hoch ist, damit dass Wasser flüssig wird, wobei dieser Schritt nach dem Mischschritt und dem Tiefkühlschritt erfolgt.

6. Masse für Beton, aufweisend ein Gemisch aus einem hydraulischen Bindemittel und Wasser, wobei das Wasser in fester Form ist, wobei das Wasserpulver eine Körnigkeit hat, die kleiner als die Körnigkeit des hydraulischen Bindemittels ist.

7. Masse für Beton nach Anspruch 6, in welcher das Gemisch ein oder mehrere Zusatzmittel aufweist.

8. Verwendung einer Masse nach einem der Ansprüche 6 oder 7 zur Ummantelung von nuklearem Abfall.

## Claims

1. Process for the manufacture of a grout for concrete, comprising a stage of mixing a hydraulic binder and water, the process comprising a stage of deep freezing the water in the solid form, the water being solidified prior to the mixing stage, the water powder exhibiting a particle size which is less than the particle size of the hydraulic binder.

2. Process according to Claim 1, in which, during the deep freezing stage, the water is maintained at a temperature of less than 0°Celsius, preferably at a temperature of less than or equal to -18°Celsius.

3. Process according to one of the preceding claims, comprising a stage of addition of an adjuvant.

4. Process according to any one of the preceding claims, comprising a stage of storage of the grout at low temperature of less than or equal to 0°Celsius, preferably of less than or equal to -18°Celsius.

5. Process for the manufacture of a grout according to any one of the preceding claims, comprising a stage of warming the solid water and hydraulic binder mixture to a sufficiently high temperature for the water to become liquid, this stage being subsequent to the mixing stage and to the deep freezing stage.

6. Grout for concrete comprising a mixture of a hydraulic binder and water in which the water is in the solid form, the water powder exhibiting a particle size which is less than the particle size of the hydraulic binder.

7. Grout for concrete according to Claim 6, in which the mixture comprises one or more adjuvants.

8. Use of a grout according to claims 6 or 7 for the coating of nuclear waste.
